# EUROPEAN PATENT APPLICATION

(11) **EP 2 267 671 A1**
(43) Date of publication of application: **29.12.2010**
(21) Application number: 09726744.7
(22) Date of filing: 18.03.2009
(51) Int. Cl.: G07G 1/01, G06Q 30/00, G06Q 50/00

(54) **FRANCHISE ADD-ON SYSTEM AND USER OPERATION TERMINAL AND MANUFACTURER MANAGEMENT DEVICE THEREFOR, AND COMPUTER PROGRAMS FOR THE USER OPERATION TERMINAL AND MANUFACTURER MANAGEMENT DEVICE**

(30) Priority: 31.03.2008 JP 2008089513
(71) Applicant: Japan Tobacco, Inc., Tokyo 105-8422 (JP)
(72) Inventor: TANAKA, Masataka, Akashi-shi Hyogo 674-0067 (JP); WATANABE, Hiroshi, Tokyo 105-8422 (JP)
(74) Representative: HOFFMANN EITLE
(86) International application number: PCT/JP2009/001197
(87) International publication number: WO 2009/122662

(57) **Abstract**

A user operation terminal 100, which has a touch panel allowing thereon enter operation by an ordinary user, is disposed in the vicinity of the sales processing device 200. When enter operation is made by an ordinary user on a commodity selection screen TSG, which is output in a displayed form to the user operation terminal 100, with the aid of a hypermedia HPM supplied by a manufacturer's management device 500, an over-the-counter commodity STP is selected. Commodity ID data TID of the over-the-counter commodity STP thus selected is sent from the user operation terminal 100 to the sales processing device 200. Accordingly, even over-the-counter commodities STP not readily accessible by the ordinary users, such as cigarette packs, may be sold in a simple and quick manner, and thereby the sales chance of newly-released products, for example, may be prevented from losing sales opportunities. In this way, a franchise add-on system which allows more simplified and quick purchase of commodities not readily accessible by ordinary users, such as cigarette packs, and thereby improves LTV and retention, may be provided.

## Description

### TECHNICAL FIELD

The present invention relates to a franchise add-on system used at franchise shops where an over-the-counter commodities each attached with commodity ID (identification) data are sold to ordinary consumers, a user operation terminal and a manufacturer's management device used therefor, and a computer program used therefor.

### BACKGROUND ART

At present, at franchise shops such as so-called convenience stores, various over-the-counter commodities are sold while being displayed on so-called store fixtures or store shelves. The above-described franchise shops additionally have sales processing devices, such as POS (Point Of Sales) terminals, or those so-called electronic cash register, installed therein.

Such the sales processing device executes sales processing based on a commodity ID data attached to each of the over-the-counter commodities, so as to produce sales history data. More specifically, a general sales processing device includes a keyboard unit or a barcode reader.

On the other hand, each over-the-counter commodity has a JAN (Japanese Article Number) code, which is a commodity ID data, placed thereon in a form of barcode image and a text of numerical sequence.

Then, the commodity ID data is entered into the sales processing device, by allowing the barcode reader to optically read the barcode image, or by entering the numerical sequence through the keyboard unit.

The above-described sales processing devices installed at the franchise shops are connected typically to a central management device installed at a so-called franchise headquarters. The central management device manages the sales history data from the sales processing devices.

The sales history data collected by the central management device in the franchise system is supplied online typically to a manufacturer's management device installed at the commodity-shipping manufacturer of the over-the-counter commodity.

In a general franchise shop, store fixtures and store shelves are disposed in a so-called commodity sales floor, and a sales processing device is installed at the position of a shop register. Ordinary users (consumers) therefore take desired over-the-counter commodities out from the store fixtures or store shelves, and bring them to the position of the shop register.

However, a part of the over-the-counter commodities, such as cigarette packs, is displayed on store fixtures or store shelves typically disposed behind the counter, and is not readily accessible by the ordinary users. Accordingly, the ordinary user who wants to buy such over-the-counter commodity orally indicates an order of purchase to a shop clerk who stands at the position where the shop register is installed.

Various proposals have been made aiming at assisting commodity sales at the above-described franchise shops (see Patent Documents 1 to 5, for example).
[Patent Document 1] Japanese Laid-Open Patent Publication No. 2006-129268
[Patent Document 2] Japanese Laid-Open Patent Publication No. 2004-303228
[Patent Document 3] Japanese Laid-Open Patent Publication No. 2006-092384
[Patent Document 4] Japanese Laid-Open Patent Publication No. 2001-338345
[Patent Document 5] Japanese Laid-Open Patent Publication No. H11-086135

### DISCLOSURE OF THE INVENTION

However, the oral indication of order for purchasing commodities such as cigarette packs by the ordinary user to the shop clerk as described in the above is cumbersome for both of the ordinary user and the shop clerk. In addition, it may be difficult in this system for the ordinary user to recognize and buy any newly-released product, so that the franchise shops may lose a chance of selling of the newly-released products.

For this reason, the over-the-counter commodities are not readily accessible by the ordinary users (consumers) as described in the above. Therefore, there has been a problem of degradation in particular in the LTV (Life Time Value) and retention.

The present invention is conceived after considering the above-described problems, the purpose of which is to provide a franchise add-on system which allows more simplified and quick purchase of commodities not readily accessible by the ordinary users, such as cigarette packs, and thereby improves LTV and retention, to provide a user operation terminal and a manufacturer's management device used therefor, and to provide a computer program used therefor.

According to the present invention, there is provided a franchise add-on system including a sales processing device which is respectively installed at each of a plurality of franchise shops, and executes sales processing of an over-the-counter commodity by a commodity ID data attached to the over-the-counter commodity so as to produce sales history data; and a manufacturer's management device installed at a commodity-shipping manufacturer, and manages the sales history data of at least a shipped and sold over-the-counter commodity, the system further including a user operation terminal which has a touch panel allowing thereon enter operation by an ordinary user, and is disposed in the vicinity of the sales processing device, the manufacturer's management device including a media storage unit which stores a hypermedia which makes the user operation terminal output, in a displayed form, a commodity selection screen allowing thereon step-wise selection of the over-the-counter commodity in response to the enter operation by the ordinary user, so as to produce the commodity ID data; and a media supply unit which supplies the stored hypermedia to the user operation terminal, the user operation terminal including a media acquisition unit which acquires the hypermedia from the manufacturer's management device; a media display unit which makes the touch panel display, in a switchable manner, the commodity selection screen of the acquired hypermedia in response to the enter operation by the ordinary user; and an ID supply unit which outputs the commodity ID data of the over-the-counter commodity, selected on the commodity selection screen displayed in a switchable manner, to the sales processing device in response to a specific enter operation. The sales processing device includes a sales processing unit which produces the sales history data by executing sales processing of the over-the-counter commodity based on the commodity ID data entered thereto.

Accordingly, in the franchise add-on system of the present invention, the sales processing device respectively installed at each of the plurality of franchise shops executes sales processing of over-the-counter commodities using the commodity ID data attached thereto, so as to produce the sales history data. The sales history data is then managed by the manufacturer's management device installed at the commodity-shipping manufacturer. Further, the user operation terminal, which includes the touch panel allowing thereon an enter operation by an ordinary user, is disposed in the vicinity of the sales processing device. The media storage unit of the manufacturer's management device stores the hypermedia which makes the user operation terminal output, in a displayed form, the commodity selection screen allowing thereon step-wise selection of the over-the-counter commodity in response to the enter operation by the ordinary user, so as to produce the commodity ID data. The media supply unit of the manufacturer's management device supplies the thus-stored hypermedia to the user operation terminal. The media acquisition unit of the user operation terminal acquires the hypermedia from the manufacturer's management device. The media display unit makes the touch panel display, in a switchable manner, the commodity selection screen of the thus-acquired hypermedia in response to the enter operation by the user. The ID supply unit outputs the commodity ID data of the over-the-counter commodity, selected on the commodity selection screen displayed in a switchable manner, to the sales processing device in response to a specific enter operation. The sales processing device makes sales processing unit execute the sales processing of the over-the-counter commodity based on the commodity ID data entered thereto, so as to produce the sales history data. Accordingly, even with respect to the over-the-counter commodity not readily accessible by the ordinary user, the ordinary user no longer needs oral indication of an order of purchase of commodity to a shop clerk, and may instead enter the commodity ID data to the sales processing device.

In the above-described franchise add-on system, the user operation terminal may further includes an ID acquisition unit which acquires the commodity ID data attached to the over-the-counter commodity, and the ID supply unit may output also the commodity ID data acquired by the ID acquisition unit to the sales processing device.

In the above-described franchise add-on system, the media display unit may make the touch panel output, in a displayed form, the commodity selection screen corresponding to the acquired commodity ID data.

In the above-described franchise add-on system, the sales processing device may further include a completion reply unit which returns completion of sales processing of the over-the-counter commodity based on the commodity ID data entered through the user operation terminal, to the user operation terminal, the user operation terminal may further include a completion receiving unit which receives the completion of sales processing from the sales processing device, and the media display unit may make the touch panel output, in a displayed form, the commodity selection screen in the initial state, upon reception of the completion of sales processing.

In the above-described franchise add-on system, the media display unit may make the touch panel output, in a displayed form, the commodity selection screen in the initial state after elapse of a predetermined duration of time when the enter operation is not detected.

In the above-described franchise add-on system, at least a part of the over-the-counter commodity may include a cigarette pack.

In the above-described franchise add-on system, the media storage unit may store the hypermedia which makes the user operation terminal output, in a displayed form, the commodity selection screen relevant to selling-by-packs and selling-by-cartons of cigarette packs, and capable of producing the commodity ID data, the media display unit may make the touch panel display, in a switchable manner, the commodity selection screen relevant to selling-by-packs and the selling-by-cartons in response to the enter operation by the ordinary user, and the ID supply unit may output also the commodity ID data relevant to the selling-by-packs and the selling-by-cartons, selected on the commodity selection screen displayed in a switchable manner, to the sales processing device.

According to the present invention, there is provided a user operation terminal which is the user operation terminal of the above franchise add-on system, including: a touch panel which allows thereon enter operation by the ordinary user; a media acquisition unit which acquires the hypermedia from the manufacturer's management device; a media display unit which makes the touch panel display, in a switchable manner, the commodity selection screen of the acquired hypermedia in response to the enter operation by the ordinary user; and an ID supply unit which outputs the commodity ID data of the over-the-counter commodity selected on the commodity selection screen displayed in a switchable manner, to the sales processing device in response to a specific enter operation.

The above-described user operation terminal may further include an ID acquisition unit which acquires the commodity ID data attached to the over-the-counter commodity, wherein the ID supply unit may output also the commodity ID data acquired by the ID acquisition unit to the sales processing device.

In the above-described user operation terminal, the media display unit may make the touch panel output, in a displayed form, the commodity selection screen corresponded to the acquired commodity ID data.

The above-described user operation terminal may further include a completion receiving unit which receives completion of the sales processing from the sales processing device, wherein the media display unit may make the touch panel output, in a displayed form, the commodity selection screen in the initial state, upon reception of the completion of sales processing.

In the above-described user operation terminal, the media display unit may make the touch panel output, in a displayed form, the commodity selection screen in the initial state, after elapse of a predetermined duration of time when the enter operation is not detected.

In the above-described user operation terminal, at least a part of the over-the-counter commodity may include a cigarette pack, the media display unit may make the touch panel display, in a switchable manner, the commodity selection screen relevant to selling-by-packs and selling-by-cartons, in response to the enter operation by the ordinary user, and the ID supply unit may output also the commodity ID data relevant to the selling-by-packs and the selling-by-cartons, selected on the commodity selection screen displayed in a switchable manner, to the sales processing device.

According to the present invention, there is provided a manufacturer's management device which is the manufacturer's management device of the above franchise add-on system, including: a media storage unit which stores a hypermedia which makes the user operation terminal output, in a displayed form, a commodity selection screen allowing thereon step-wise selection of the over-the-counter commodity in response to the enter operation by the ordinary user, so as to produce the commodity ID data; and a media supply unit which supplies the stored hypermedia to the user operation terminal.

According to the present invention, there is provided a first computer program configured to make the user operation terminal, execute: a media acquisition process which acquires the hypermedia from the manufacturer's management device; a media display process which makes the touch panel display, in a switchable manner, the commodity selection screen of the acquired hypermedia in response to the enter operation by the ordinary user; and an ID supply process which outputs the commodity ID data of the over-the-counter commodity selected on the commodity selection screen displayed in a switchable manner, to the sales processing device in response to a specific enter operation.

According to the present invention, there is provided a second computer program configured to make the manufacturer's management device, execute: a media storage process which stores a hypermedia which makes the user operation terminal output, in a displayed form, a commodity selection screen allowing thereon step-wise selection of the over-the-counter commodity in response to the enter operation by the ordinary user, so as to produce the commodity ID data; and a media supply process which supplies the stored hypermedia to the user operation terminal.

Note that the individual constituents of the present invention may be good enough if they are formed so as to express the functions thereof, and may be embodied typically in a form of hardware dedicated to express predetermined functions, in a form of franchise add-on system given a predetermined function by a computer program, in a form of predetermined function embodied on the franchise add-on system by a computer program, in a form of arbitrary combination of these configurations, or the like.

Each of the various constituents of the present invention may not always necessarily be an independent entity, and instead a plurality of constituents may configure a single component, a single constituent may be composed of a plurality of components, a certain constituent may be a part of some other constituent, a part of a certain constituent and a part of some other constituent may overlap, for example.

The hypermedia in the context of the present invention may be good enough if it has image data of a plurality of commodity selection screens which may be displayed in a switchable manner in response to enter operation. This sort of hypermedia may have a part of, or all of movie data, text data, sound data, operational icon and so forth, and allows data structures in which these components are connected by hyperlink.

In the franchise add-on system of the present invention, the user operation terminal, which includes the touch panel allowing thereon an enter operation by an ordinary user, is disposed in the vicinity of the sales processing device. To the user operation terminal, the hypermedia which makes the user operation terminal output, in a displayed form, a commodity selection screen allowing thereon step-wise selection of the over-the-counter commodity in response to the enter operation by the ordinary user, so as to produce the commodity ID data, is supplied from the manufacturer's management device. The user operation terminal makes the touch panel display, in a switchable manner, the commodity selection screen of the acquired hypermedia in response to the enter operation by the ordinary user, and outputs the commodity ID data of the over-the-counter commodity selected on the commodity selection screen displayed in a switchable manner, to the sales processing device in response to a specific enter operation.
In this way, the ordinary user may enter the commodity ID data to the sales processing device without oral indication of order of purchase of commodity to a shop clerk. Accordingly, even over-the-counter commodities not readily accessible by the ordinary users, such as cigarette packs, may be sold in a simple and quick manner, and thereby the sales chance of newly-released products, for example, may be prevented from losing sales opportunities.

### BRIEF DESCRIPTION OF THE DRAWINGS

The above and other objects, features and advantages of the present invention will be more apparent from the following description of a certain preferred embodiment taken in conjunction with the accompanying drawings.

FIG. 1 is a schematic drawing illustrating a logic structure of a franchise add-on system of one embodiment of the present invention;
FIG. 2 is a block diagram illustrating a physical structure of the franchise add-on system;
FIG. 3 is a block diagram illustrating a physical structure of a user operation terminal;
FIG. 4 is a perspective view illustrating an appearance of the user operation terminal;
FIG. 5 is a schematic perspective view illustrating an internal layout of a convenience store as a representative of the franchise shop;
FIG. 6 is a perspective view illustrating an appearance of a cigarette pack as a representative of the over-the-counter commodity; and
FIG. 7 is a flow chart illustrating a method of data processing in the user operation terminal.

### BEST MODE FOR CARRYING OUT THE INVENTION

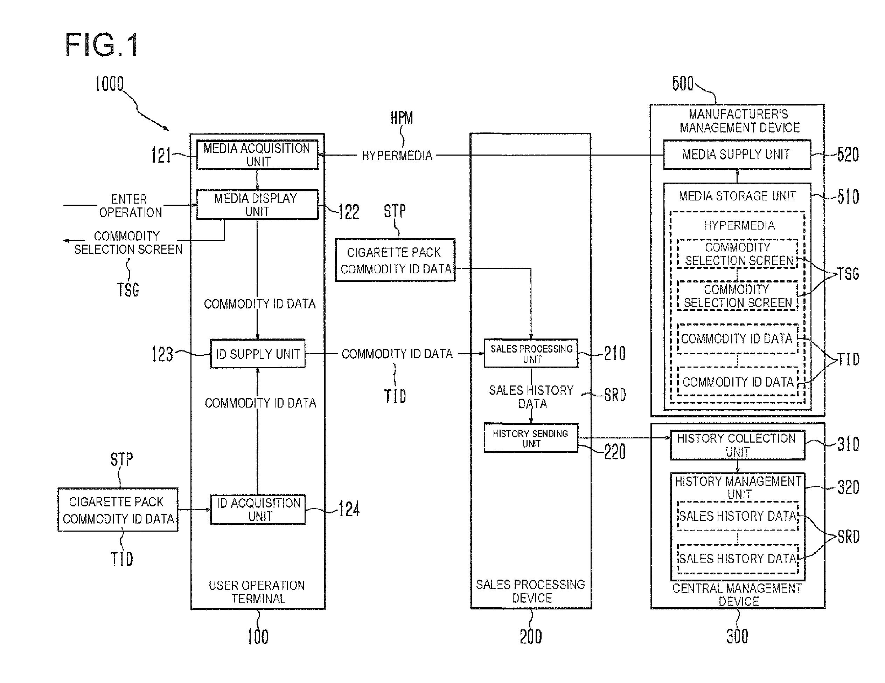

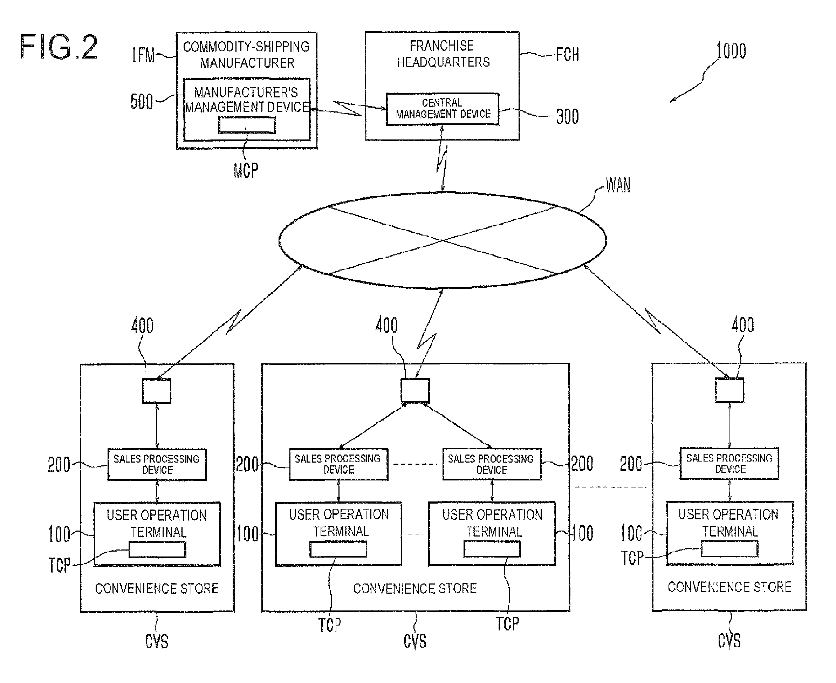

An embodiment of the present invention will be explained below, referring to the attached drawings. A franchise add-on system 1000 of this embodiment includes, as illustrated in FIG. 1 and FIG. 2, a sales processing device 200 which is respectively installed at each convenience store CVS, a representative of a plurality of franchise shops, and executes sales processing of cigarette packs STP as a representative of the over-the-counter commodities, using commodity ID data TID attached thereto so as to produce sales history data SRD; a central management device 300 which is installed at least at one franchise headquarters FCH, and collects the sales history data SRD; and a manufacturer's management device 500 which is installed at a commodity-shipping manufacturer IFM, and manages the sales history data SRD of at least shipped and sold cigarette packs STP.

For this purpose, as illustrated in FIG. 1, the sales processing device 200 includes a sales processing unit 210, which executes sales processing of the cigarette packs STP based on the entered commodity ID data TID, so as to produce sales history data SRD; and a history sending unit 220 which sends the thus-produced sales history data SRD to the central management device 300.

The central management device 300 includes a history collection unit 310 which collects the sales history data SRD from the sales processing devices 200 installed at the plurality of convenience stores CVS; and a history management unit 320 which manages the thus-collected sales history data SRD.

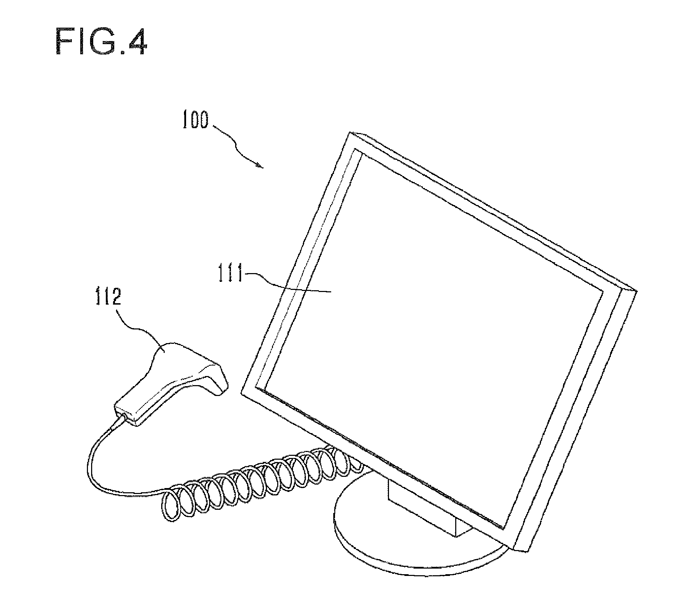

The franchise add-on system 1000 of this embodiment also includes, as illustrated in FIG. 4, a user operation terminal 100 which includes a touch panel 111 allowing thereon an enter operation by an ordinary user, disposed in the vicinity of the sales processing device 200.

In other words, the franchise add-on system 1000 of this embodiment corresponds to a configuration in which a franchise system, composed of the sales processing devices 200 of a plurality of convenience stores CVS and the central management device 300 of at least one franchise headquarters FCH, is added with the manufacturer's management device 500 of the commodity-shipping manufacturer IFM and the user operation terminal 100.

The manufacturer's management device 500 of the commodity-shipping manufacturer IFM includes, as illustrated in FIG. 1, a media storage unit 510 which stores a hypermedia HPM which makes the user operation terminal 100 output, in a displayed form, a commodity selection screen TSG allowing thereon step-wise selection of the cigarette packs STP in response to the enter operation by the ordinary user, so as to produce the commodity ID data TID; and a media supply unit 520 which supplies the stored hypermedia HPM to the user operation terminal 100.

The user operation terminal 100 includes a media acquisition unit 121 which acquires the hypermedia HPM from the manufacturer's management device 500; a media display unit 122 which makes the touch panel 111 display, in a switchable manner, the commodity selection screen TSG of the acquired hypermedia HPM in response to the enter operation by the ordinary user; and an ID supply unit 123 which outputs the commodity ID data TID of the cigarette packs STP selected on the commodity selection screen displayed in a switchable manner, to the sales processing device 200 in response to a specific enter operation.

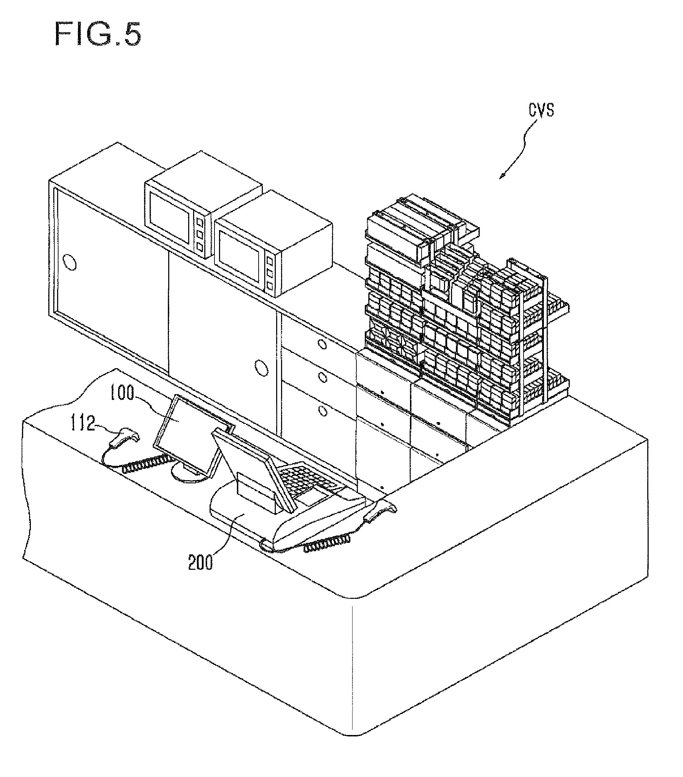

More specifically, in the franchise add-on system 1000 of this embodiment, the sales processing device 200 is composed of a so-called electronic cash register or POS terminal, and at least one of which is installed at the position of shop register in the convenience store CVS, as illustrated in FIG. 5.

As illustrated in FIG. 2, a shop's computer 400 is installed at the back yard of the convenience store CVS. The sales processing device 200 of the convenience store CVS is connected, for example, via the shop's computer 400, and through a secure communication network WAN such as wide-area LAN (Local Area Network), to the central management device 300 at the franchise headquarters FCH.

The central management device 300 is typically composed of a so-called POS server at the franchise headquarters FCH, collects the sales history data SRD from the sales processing devices 200 of the plurality of convenience stores CVS, and manages them.

In the franchise add-on system 1000 of this embodiment, as illustrated in FIG. 2 and FIG. 5, the user operation terminal 100 is respectively installed in the vicinity of the sales processing device 200 at the position of the shop register in each convenience store CVS.

In the franchise add-on system 1000 of this embodiment, as illustrated in FIG. 1 and FIG. 2, the user operation terminal 100 is connected to the manufacturer's management device 500 of the commodity-shipping manufacturer IFM, typically through the sales processing device 200 and the central management device 300.

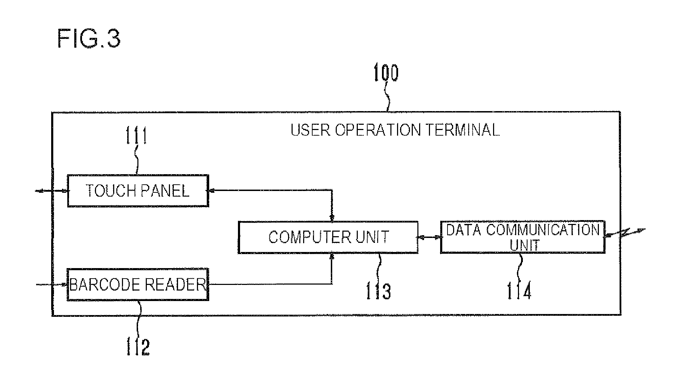

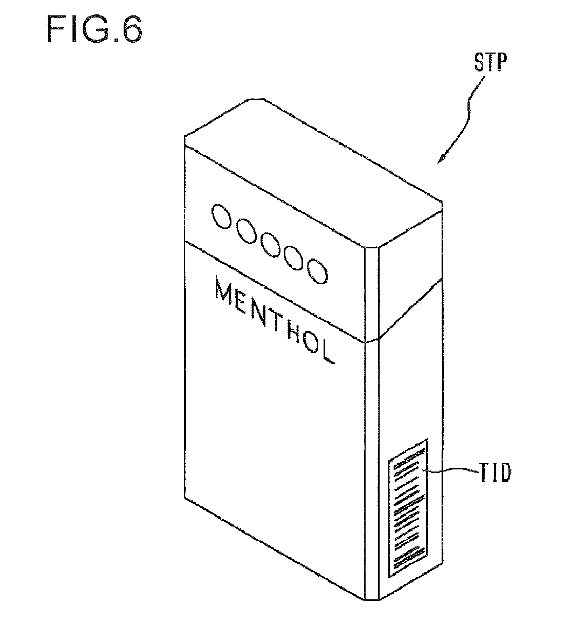

The user operation terminal 100 includes hardware which includes the touch panel 111 which allows thereon enter operation by an ordinary user as illustrated in FIG. 3 and FIG. 4; a barcode reader 112 which optically reads a barcode image of the commodity ID data TID attached typically to the cigarette packs STP as illustrated in FIG. 6; a computer unit 113 which integrally controls the individual constituents according to the computer program TCP installed thereon as illustrated in FIG. 2; and a data communication unit 114 which executes data communication with the sales processing device 200.

By the integral control of the individual constituents by the computer unit 113 according to the computer program TCP installed thereon, the above-described individual constituents such as the constituent 121 and so forth are logically embodied on the user operation terminal 100.

For example, the media acquisition unit 121 and the ID supply unit 123 typically correspond to functions of the computer unit 113 controlling data communication executed by the data communication unit 114, corresponding to the computer program TCP.

The media display unit 122 typically corresponds to a function of the computer unit 113 integrally controlling image display and enter operation on the touch panel 111, corresponding to the computer program TCP.

In addition, as described in the above, the user operation terminal 100 also includes an ID acquisition unit 124 used for acquiring the commodity ID data TID attached to the cigarette packs STP, as illustrated in FIG. 1, composed by having the computer unit 113 recognize commodity ID data TID acquired from the barcode image using the barcode reader 112.

In this case, the ID supply unit 123 outputs also the commodity ID data TID acquired by the ID acquisition unit 124 to the sales processing device 200. In addition, the media acquisition unit 121 acquires the hypermedia HPM of the commodity selection screen TSG, corresponded to the acquired commodity ID data TID, from the manufacturer's management device 500.

In this case, the media display unit 122 makes the touch panel 111 output, in a displayed form, the commodity selection screen TSG of the acquired hypermedia HPM. Note that the media display unit 122 makes the touch panel 111 output, in a displayed form, the commodity selection screen TSG in the initial state, after elapse of a predetermined duration of time if no enter operation is detected.

The above-described computer program TCP of the user operation terminal 100 is typically described so as to make the user operation terminal 100 execute a media acquisition process acquiring the hypermedia HPM from the manufacturer's management device 500; a media display process making the touch panel 111 display, in a switchable manner, the commodity selection screen TSG of the acquired hypermedia HPM in response to the enter operation by the ordinary user; and an ID supply process outputting the commodity ID data TID of the cigarette packs STP selected on the commodity selection screen TSG displayed in a switchable manner, to the sales processing device 200 in response to a specific enter operation.

Further, the computer program MCP of the manufacturer's management device 500 is typically described so as to make the manufacturer's management device 500 execute a media storage process storing the hypermedia HPM which makes the user operation terminal 100 output, in a displayed form, the commodity selection screen TSG allowing thereon step-wise selection of the cigarette packs STP in response to the enter operation by the ordinary user, so as to produce the commodity ID data TID; and a media supply process supplying the stored hypermedia HPM to the user operation terminal 100.

In the above-described configuration, the cigarette packs STP, which are commodities to be sold in the convenience store CVS, may be displayed behind the so-called shop register typically on store shelf as illustrated in FIG. 5, and may not readily be accessible by the ordinary users.

It has therefore been a general practice for the ordinary user who wants to buy the cigarette pack STP to orally give a message on desired brand and quantity of cigarette to a shop clerk who stands at the position where the shop register is installed, in order to purchase the desired cigarette pack STP.

In this case, since the cigarette pack STP has the commodity ID data TID in a form of barcode image placed thereon as illustrated in FIG. 6, so that the shop clerk enters the commodity ID data TID by allowing the barcode reader of the sales processing device 200 to optically read the barcode image on the cigarette packs STP.

Then the sales processing of the cigarette pack STP is executed based on the commodity ID data TID, and sales history data SRD is produced. The sales history data SRD is sent from the sales processing device 200 at the convenience store CVS to the central management device 300 at the franchise headquarters FCH.

The central management device 300 collects the sales history data SRD from the sales processing devices 200 of a large number of convenience stores CVS as described in the above, so as to utilize them typically in creation of a sales strategy.

In addition, the manufacturer's management device 500 of the commodity-shipping manufacturer IFM acquires the sales history data of the shipped cigarette packs STP from the central management device 300 and manages them, typically based on a contract with the franchise headquarters FCH. Accordingly, also the commodity-shipping manufacturer IFM may use the sales history data SRD in creation of a sales strategy of the cigarette packs STP to be shipped.

It is to be noted herein that, as illustrated in FIG. 5, the franchise add-on system 1000 of this embodiment includes the user operation terminal 100 which allows thereon enter operation by the ordinary users, in the vicinity of the sales processing device 200 which allows thereon enter operation by the shop clerk.

As described in the above, the commodity-shipping manufacturer IFM of the cigarette packs STP, which are the over-the-counter commodities sold at the convenience stores CVS, manages the sales history data SRD of the cigarette packs STP using the manufacturer's management device 500.

The manufacturer's management device 500 stores the hypermedia HPM which makes the user operation terminal 100 output, in a displayed form, the commodity selection screen TSG allowing thereon step-wise selection of the cigarette packs STP in response to the enter operation by the ordinary user, so as to produce the commodity ID data TID, and supplies the hypermedia HPM to the user operation terminal 100.

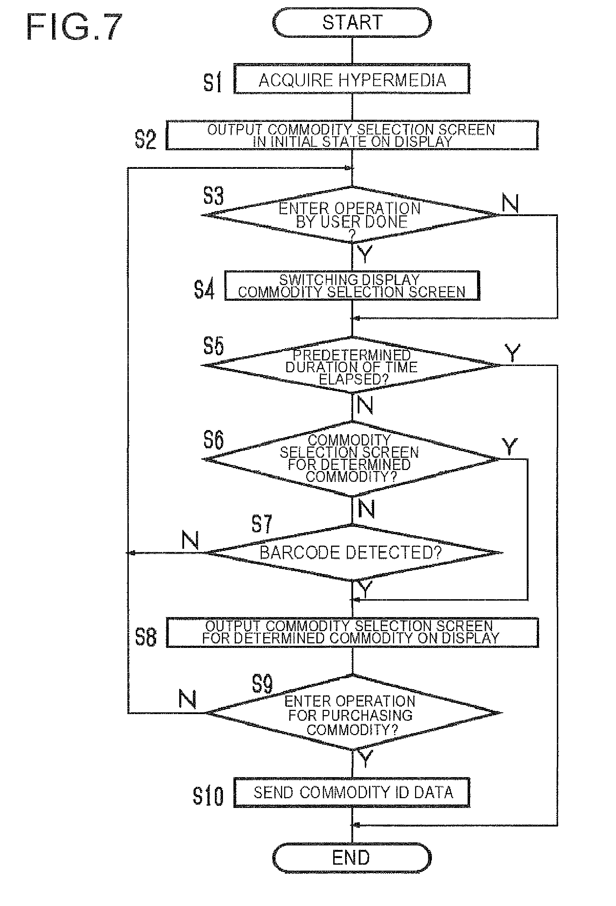

Then, as illustrated in FIG. 7, upon acquisition of the hypermedia HPM (step S1), the user operation terminal 100 outputs, in a displayed form, the commodity selection screen TSG in the initial state of the hypermedia HPM to the touch panel 111 (step S2).

The commodity selection screen TSG in the initial state typically includes a guidance message such as "Make your choice from the brands below.", and names of major brands such as "cigarette brand A, cigarette brand B, cigarette brand C, ..." typically in a form of operational icons designed after the appearances of the cigarette packs STP, output thereon in a displayed form (not illustrated).

In addition, a guidance message such as "Or choose a brand of your taste by categories." is output in a displayed form, with operational icons indicating conditions of selection such as "Menthol, Non-Menthol", "Long, Middle, Short", and "Brand New, Best Selling" (not illustrated).

When the ordinary user makes an enter operation according to one's desire on the above-described commodity selection screen TSG (step S3-Y), the commodity selection screen TSG is displayed in a switchable manner, in response to the enter operation (step S4).

When the commodity selection screen TSG is output in a switchable manner after a specific cigarette pack STP is determined by the above-described enter operation (step S6), there are seen a guidance message such as "Place an order?", and operational icons such as "Enter, Back to Previous, Back to Top", and "xxx Packs, xxx Cartons", with pull-down menus for choosing quantity (step S8).

When the ordinary user makes an enter operation for purchase according to one's desire on the above-described commodity selection screen TSG (step S9-Y), the commodity ID data TID is sent, together with the quantity of purchase and so forth, from the user operation terminal 100 to the sales processing device 200, in response to the enter operation (step S10).

Among the over-the-counter commodities, the cigarette packs STP are highly portable and palatable. For this reason, it is highly probable that the ordinary user who wants to buy the cigarette packs STP of a specific brand already possess the same brand of cigarette packs STP.

Accordingly, the above-described commodity selection screen TSG in the initial state also outputs a guidance message such as "Bring your cigarette pack to set the barcode to the reader on the right, if you have now the same brand of cigarette" (not illustrated).

When the user sets the barcode image of the cigarette packs STP of one's own to the handy-type barcode reader 112 of the user operation terminal 100, the commodity ID data TID is input to the user operation terminal 100 (step S7-Y).

The user operation terminal 100 now immediately displays, in a switchable manner, the commodity selection screen TSG on which the cigarette packs STP is determined (step S8). Therefore, when the ordinary user makes an enter operation for the purchase according to one's desire on the above-described commodity selection screen TSG as described in the above (step S9-Y), the commodity ID data TID is sent, together with the quantity of purchase and so forth, from the user operation terminal 100 to the sales processing device 200, in response to the enter operation (step S10).

The sales processing device 200, which receives the commodity ID data TID of the cigarette packs STP from the user operation terminal 100 as described in the above, executes the sales processing of the cigarette packs STP, similarly to the case where the shop clerk allows the barcode reader of the sales processing device 200 to optically read the barcode image on the cigarette pack STP, and enters the quantity of purchase through a keyboard as described in the above.

Accordingly, the sales history data SRD is similarly produced also in this case, and sent from the sales processing device 200 at the convenience store CVS to the central management device 300 at the franchise headquarters FCH.

The sales history data SRD herein may include, for example, also various data relevant to whether the sales processing of the cigarette packs STP is ascribable to the enter operation on the user operation terminal 100 or not.

If a predetermined duration of time elapses without detecting the enter operation by the ordinary user (step S5-Y), The user operation terminal 100 automatically returns to the initial state in which commodity selection screen TSG in the initial state is displayed (step S2).

In the franchise add-on system 1000 of this embodiment, the user operation terminal 100 which includes the touch panel 111 allowing thereon enter operation by the user as described in the above is disposed in the vicinity of the sales processing device 200.

To the user operation terminal 100, the hypermedia HPM which makes the user operation terminal 100 output, in a displayed form, the commodity selection screen TSG allowing thereon step-wise selection of the cigarette packs STP in response to the enter operation by the ordinary user, so as to produce the commodity ID data TID, is supplied from the manufacturer's management device 500.

The user operation terminal 100 makes the touch panel 111 display, in a switchable manner, the commodity selection screen TSG of the hypermedia HPM in response to the enter operation by the ordinary user, and outputs the commodity ID data TID of the cigarette packs STP selected on the commodity selection screen TSG displayed in a switchable manner, to the sales processing device 200 in response to a specific enter operation.

In this way, the ordinary user may enter the commodity ID data TID to the sales processing device 200, without orally indicating an order of purchase to the shop clerk. Accordingly, even the over-the-counter commodities STP not readily accessible by the ordinary users, such as cigarette packs STP, may be sold in a simple and quick manner, and thereby the sales chance of newly-released products, for example, may be prevented from losing sales opportunities.

In particular, the commodity selection screen TSG of the hypermedia HPM, allowing thereon step-wise selection of the cigarette packs STP in response to the enter operation, is output in a displayed form on the touch panel 111 of the user operation terminal 100. Accordingly, the ordinary user may intuitively select the cigarette packs STP without needing any expertized skill.

In addition, the user operation terminal 100 may also acquire the commodity ID data TID attached to the cigarette packs STP through the barcode reader 112, and may also output the thus-acquired commodity ID data TID to the sales processing device 200.

Accordingly, the ordinary user who already brings the cigarette packs STP same as that he or she wants to buy may readily enter the order of purchase of desired cigarette packs STP without enter operation of the user operation terminal 100.

In addition, the user operation terminal 100 automatically returns to the initial state, if a predetermined duration of time elapses without detecting the enter operation by the ordinary user. Accordingly, if one ordinary user leave the user operation terminal 100 after completing or interrupting choice of the commodities, the next ordinary user may be acceptable for the enter operation on the user operation terminal 100 without problem.

The manufacturer's management device 500 stores the hypermedia HPM which makes the user operation terminal 100 output, in a displayed form, the commodity selection screen TSG relevant to selling-by-packs and selling-by-cartons of the cigarette packs STP, so as to produce the commodity ID data TID.

The user operation terminal 100 then makes the touch panel 111 display, in a switchable manner, the commodity selection screen TSG relevant to selling-by-packs and selling-by-cartons in response to the enter operation by the ordinary user, and outputs also the commodity ID data TID relevant to selling-by-packs and selling-by-cartons, selected on the commodity selection screen TSG displayed in a switchable manner, to the sales processing device 200.

Accordingly, the user operation terminal 100 allows the ordinary user to readily and correctly choose purchase-by-pack or purchase-by carton, which is a specific style of purchase of cigarette packs STP, and to enter data to the sales processing device 200.

With the franchise add-on system 1000 of this embodiment, the ordinary user may purchase desired cigarette packs STP without feeling stress, as described in the above. Accordingly, LTV and retention of the cigarette packs STP can be improved.

It is to be understood that the present invention is not limited to this embodiment, and instead allows various modifications without departing from the scope of the invention thereof. For example, the above-described embodiment was on the premise that the user operation terminal 100 acquires the hypermedia HPM which contains a series of commodity selection screens TSG from the manufacturer's management device 500, and the user operation terminal 100 placed in an stand-alone state displays the commodity selection screen TSG of the hypermedia HPM in a switchable manner.

Alternatively, the manufacturer's management device 500 and the user operation terminal 100 may bidirectionally communicate in a real-time manner, so as to allow the manufacturer's management device 500 to supply the commodity selection screen TSG every time the user operation terminal 100 is manually operated.

The above-described embodiment dealt with an exemplary case where the user operation terminal 100 makes the touch panel 111, output in a displayed form, the commodity selection screen TSG in the initial state, if a predetermined duration of time elapses without detecting the enter operation.

Alternatively, the user operation terminal 100 may be returned into the initial state after the sales process is executed based on the commodity ID data TID sent from the user operation terminal 100 to the sales processing device 200, and the sales processing device 200 returns the completion of the sales.

The above-described embodiment also dealt with the exemplary case where the user operation terminal 100 acquires the commodity ID data TID from the barcode image on the cigarette packs STP using the barcode reader 112. The commodity ID data TID may alternatively be produced based on image recognition by the user operation terminal, after the appearance of the cigarette packs STP is photographed by a CCD camera (not illustrated).

Still alternatively, the user operation terminal may acquire the commodity ID data TID by capturing an image of a two-dimensional code on the cigarette packs STP (not illustrated). The two-dimensional code such as so-called QR code (registered trademark) may ensure storage of a large volume of data only by simple printing.

It may therefore be also allowable to preliminarily record the commodity ID data TID of novelty goods such as portable ashtray in the two-dimensional code on the cigarette packs STP, and to make the user operation terminal 100 acquire also the commodity ID data TID of the novelty goods, together with the commodity ID data TID of the cigarette packs STP.

In this case, when the ordinary user sets the two-dimensional code on the cigarette pack STP to the user operation terminal 100, the commodity ID data TID of the free novelty goods is output together with the commodity ID data TID of the cigarette packs STP, from the sales processing device 200 to the shop clerk. Accordingly, the novelty goods may be supplied to the ordinary user who wants to buy the cigarette packs STP, without any special consideration by both of the ordinary user and the shop clerk.

The above-described embodiment dealt with the exemplary case where the handy-type barcode reader 112 is connected via a curl cord to the touch panel 111 of the user operation terminal 100. Alternatively, the barcode reader 112 may be incorporated typically in the front side portion of the touch panel 111 (not illustrated).

The user operation terminal may alternatively have an input device such as barcode reader, magnetic reader, RFID (Radio Frequency Identification) reader or the like, and may acquire the commodity ID data TID from the barcode, magnetic stripe, or RAID chip on the cigarette packs STP (not illustrated).

The above-described embodiment dealt with the exemplary case where the user operation terminal 100 outputs, in a displayed form, the commodity selection screen TSG of only the cigarette packs STP as the over-the-counter commodity, with the aid of the hypermedia HPM. The franchise add-on system of the present invention may alternatively be applicable to various over-the-counter commodities selected through enter operation by the ordinary users.

The above-described embodiment dealt with the exemplary case where the user operation terminal 100 produces only the commodity ID data TID of the cigarette packs STP with the aid of the commodity selection screen TSG of the hypermedia HPM. The commodity ID data TID may alternatively be produced by outputting, in a displayed form, the novelty goods such as disposal lighter, portable ashtray, and so forth, together with the cigarette packs STP on the commodity selection screen TSG.

Alternatively, when the ordinary user selects the cigarette packs STP on the commodity selection screen TSG of the hypermedia HPM using the user operation terminal 100, also newly-released cigarette packs STP, other cigarette packs STP including correlated characteristics, cigarette packs STP of the upper grade and so forth, may be output in a displayed form on the commodity selection screen TSG.

In particular, when the ordinary user selects the cigarette packs STP according to the condition of selection on the commodity selection screen TSG as described in the above, the above-descried various cigarette packs STP may be recommended to the ordinary user, corresponding to the conditions of selection.

Still alternatively, the above-described embodiment dealt with the exemplary case where the individual constituents of the user operation terminal 100 and the manufacturer's management device 500 are logically embodied as various functions by the computer program. Each of the individual constituents may alternatively, be formed as specific hardware, or as a combination of software and hardware.

It may, of course, be understood that the above-described embodiments and a plurality of modified examples may be combined so far as the contents of which may not be contradictory. Structures of the individual constituents, specifically described in the embodiment and the modified examples, may be modified in various ways so far as the present invention may be satisfied.

## Claims

1. A franchise add-on system comprising a sales processing device which is respectively installed at each of a plurality of franchise shops, and executes sales processing of an over-the-counter commodity by a commodity ID (identification) data attached to said over-the-counter commodity so as to produce sales history data; and a manufacturer's management device installed at a commodity-shipping manufacturer, and manages said sales history data of at least a shipped and sold over-the-counter commodity,
said system further comprising a user operation terminal which has a touch panel allowing thereon enter operation by an ordinary user, and is disposed in the vicinity of said sales processing device,
said manufacturer's management device including a media storage unit which stores a hypermedia which makes said user operation terminal output, in a displayed form, a commodity selection screen allowing thereon step-wise selection of said over-the-counter commodity in response to the enter operation by said ordinary user, so as to produce said commodity ID data; and a media supply unit which supplies said stored hypermedia to said user operation terminal,
said user operation terminal including a media acquisition unit which acquires said hypermedia from said manufacturer's management device; a media display unit which makes said touch panel display, in a switchable manner, said commodity selection screen of said acquired hypermedia in response to the enter operation by said ordinary user; and an ID supply unit which outputs said commodity ID data of said over-the-counter commodity, selected on said commodity selection screen displayed in a switchable manner, to said sales processing device in response to a specific enter operation, and
said sales processing device including a sales processing unit which produces said sales history data by executing sales processing of said over-the-counter commodity based on said commodity ID data entered thereto.

2. The franchise add-on system as claimed in Claim 1,
wherein said user operation terminal further includes an ID acquisition unit which acquires said commodity ID data attached to said over-the-counter commodity, and said ID supply unit outputs also said commodity ID data acquired by said ID acquisition unit to said sales processing device.

3. The franchise add-on system as claimed in Claim 2,
wherein said media display unit makes said touch panel output, in a displayed form, said commodity selection screen corresponding to said acquired commodity ID data.

4. The franchise add-on system as claimed in any one of Claims 1 to 3,
wherein said sales processing device further includes a completion reply unit which returns completion of sales processing of said over-the-counter commodity based on said commodity ID data entered through said user operation terminal, to said user operation terminal,
said user operation terminal further includes a completion receiving unit which receives said completion of sales processing from said sales processing device, and
said media display unit makes said touch panel output, in a displayed form, said commodity selection screen in the initial state, upon reception of said completion of sales processing.

5. The franchise add-on system as claimed in any one of Claims 1 to 4,
wherein said media display unit makes said touch panel output, in a displayed form, said commodity selection screen in the initial state after elapse of a predetermined duration of time when said enter operation is not detected.

6. The franchise add-on system as claimed in any one of Claims 1 to 5,
wherein at least a part of said over-the-counter commodity includes a cigarette pack.

7. The franchise add-on system as claimed in Claim 6,
wherein said media storage unit stores said hypermedia which makes said user operation terminal output, in a displayed form, said commodity selection screen relevant to selling-by-packs and selling-by-cartons of cigarette packs, and capable of producing said commodity ID data,
said media display unit makes said touch panel display, in a switchable manner, said commodity selection screen relevant to selling-by-packs and said selling-by-cartons in response to the enter operation by said ordinary user, and
said ID supply unit outputs also said commodity ID data relevant to said selling-by-packs and said selling-by-cartons, selected on said commodity selection screen displayed in a switchable manner, to said sales processing device.

8. A user operation terminal of the franchise add-on system as claimed in any one of Claims 1 to 7, comprising:
a touch panel which allows thereon enter operation by said ordinary user;
a media acquisition unit which acquires said hypermedia from said manufacturer's management device;
a media display unit which makes said touch panel display, in a switchable manner, said commodity selection screen of said acquired hypermedia in response to the enter operation by said ordinary user; and
an ID supply unit which outputs said commodity ID data of said over-the-counter commodity selected on said commodity selection screen displayed in a switchable manner, to said sales processing device in response to a specific enter operation.

9. The user operation terminal as claimed in Claim 8, further comprising:
an ID acquisition unit which acquires said commodity ID data attached to said over-the-counter commodity,
wherein said ID supply unit outputs also said commodity ID data acquired by said ID acquisition unit to said sales processing device.

10. The user operation terminal as claimed in Claim 9,
wherein said media display unit makes said touch panel output, in a displayed form, said commodity selection screen corresponded to said acquired commodity ID data.

11. The user operation terminal as claimed in any one of Claims 8 to 10, further comprising:
a completion receiving unit which receives completion of said sales processing from said sales processing device,
wherein said media display unit makes said touch panel output, in a displayed form, said commodity selection screen in the initial state, upon reception of said completion of sales processing.

12. The user operation terminal as claimed in any one of Claims 8 to 11,
wherein said media display unit makes said touch panel output, in a displayed form, said commodity selection screen in the initial state, after elapse of a predetermined duration of time when said enter operation is not detected.

13. The user operation terminal as claimed in any one of Claims 8 to 12,
wherein at least a part of said over-the-counter commodity includes a cigarette pack,
said media display unit makes said touch panel display, in a switchable manner, said commodity selection screen relevant to selling-by-packs and selling-by-cartons, in response to the enter operation by said ordinary user, and
said ID supply unit outputs also said commodity ID data relevant to said selling-by-packs and said selling-by-cartons, selected on said commodity selection screen displayed in a switchable manner, to said sales processing device.

14. A manufacturer's management device of said franchise add-on system as claimed in any one of Claims 1 to 7, comprising:
a media storage unit which stores a hypermedia which makes said user operation terminal output, in a displayed form, a commodity selection screen allowing thereon step-wise selection of said over-the-counter commodity in response to the enter operation by said ordinary user, so as to produce said commodity ID data; and
a media supply unit which supplies said stored hypermedia to said user operation terminal.

15. A computer program configured to make said user operation terminal as claimed in any one of Claims 8 to 13, execute:
a media acquisition process which acquires said hypermedia from said manufacturer's management device;
a media display process which makes said touch panel display, in a switchable manner, said commodity selection screen of said acquired hypermedia in response to the enter operation by said ordinary user; and
an ID supply process which outputs said commodity ID data of said over-the-counter commodity selected on said commodity selection screen displayed in a switchable manner, to said sales processing device in response to a specific enter operation.

16. The computer program configured to make said manufacturer's management device as claimed in Claim 14, execute:
a media storage process which stores a hypermedia which makes said user operation terminal output, in a displayed form, a commodity selection screen allowing thereon step-wise selection of said over-the-counter commodity in response to the enter operation by said ordinary user, so as to produce said commodity ID data; and
a media supply process which supplies said stored hypermedia to said user operation terminal.
